(19) Europäisches Patentamt
European Patent Office
Office européen des brevets

(11) Veröffentlichungsnummer: **0 176 581 B1**

(12) # EUROPÄISCHE PATENTSCHRIFT

(45) Veröffentlichungstag der Patentschrift:
14.06.89

(51) Int. Cl.⁴: **A 01 D 34/82**

(21) Anmeldenummer: 85902016.6

(22) Anmeldetag: **09.04.85**

(86) Internationale Anmeldenummer:
**PCT/EP 85/00160**

(87) Internationale Veröffentlichungsnummer:
**WO 85/04548 (24.10.85 Gazette 85/23)**

(54) SCHNEIDKOPF FÜR EINEN FADENSCHNEIDER.

(30) Priorität: 09.04.84 DE 3413336

(43) Veröffentlichungstag der Anmeldung:
09.04.86 Patentblatt 86/15

(45) Bekanntmachung des Hinweises auf die Patenterteilung:
14.06.89 Patentblatt 89/24

(84) Benannte Vertragsstaaten:
AT BE CH FR IT LI NL SE

(56) Entgegenhaltungen:
EP-A- 0 140 634
WO-A-81/03106
DE-A- 3 005 968
FR-A- 2 405 003
US-A- 4 104 796
US-A- 4 254 550
US-A- 4 347 666
US-A- 4 426 780

(73) Patentinhaber: Wolf-Geräte GmbH,
Gregor-Wolf-Strasse 16 Postfach 860 und 880,
D-5240 Betzdorf/Sieg (DE)

(72) Erfinder: ORTHEY, Gebhard, Raiffeisenstr. 10,
D-5241 Nauroth (DE)
Erfinder: WEID, Helmut, Am Koppelsberg 8,
D-5241 Niederdreisbach (DE)

(74) Vertreter: Koch, Günther, Dipl.-Ing. et al, Postfach 920,
D-8000 München 33 (DE)

## Beschreibung

Die Erfindung bezieht sich auf einen elektromotorisch angetriebenen Schneidkopf für einen Fadenschneider. Derartige Fadenschneider arbeiten mit einem aus dem rotierenden Schneidkopf radial vorstehenden, durch die Zentrifugalkraft straff gehaltenen Kunststoffaden, der infolge seiner relativ hohen Umfangsgeschwindigkeit einen glatten Schnitt von Gras, Unkaut oder anderen Pflanzen, insbesondere auch an Rändern, gewährleistet. Der auf einer Spule im Schneidkopf aufgewickelte Faden muss von Zeit zu Zeit nachgestellt werden, weil die umlaufende Fadenlänge sich abnutzt und häufig bei Auftreffen auf Steine, Kanten und andere Gegenstände gekappt wird. Diese Nachstellung musste früher von Hand vorgenommen werden, was ziemlich umständlich und zeitraubend war.

Durch die US-A 4 104 796 ist ein Fadenschneider mit automatischer Nachstellung bekannt. Hierbei erfolgt die Entriegelung der Fadenspule innerhalb des Schneidkopfes drehzahlabhängig immer dann, wenn infolge der sich bei Abnutzung verkürzenden Fadenlänge die Drehzahl des Motors über eine vorbestimmte Solldrehzahl ansteigt. Damit diese Überdrehzahl den Verriegelungsvorgang auslöst, sind verschiedene komplizierte Konstruktionen vorgesehen. Entweder erfolgt die Einstellung über ein Niederdrehzahl-Gleitstück und ein Hochdrehzahl-Gleitstück, die in Verbindung mit verschieden starken Federn arbeiten. Gemäss einer anderen Ausführungsform ist eine in Radialrichtung angeordnete Steuerfeder vorgesehen, wodurch sich eine nicht zu kompensierende Unwucht bei radialer Verstellung von Gleitschuh und Feder ergibt. Gemäss einem weiteren Ausführungsbeispiel dieser Patentschrift ist die Fadenspule relativ zum Gehäuse mittels Federarmen gehalten und die Aufhebung der Verriegelung erfolgt bei einer vorgewählten Drehzahl, welche oberhalb der Arbeitsdrehzahl liegt. Hierbei ist die Rastung problematisch.

Gemäss einem weiteren Ausführungsbeispiel ist eine hydraulische Drehkrafteinheit vorgesehen, wobei eine durch Fliehkraft erzeugte Flüssigkeitsreibung benutzt wird. Dies ergibt ausser einem komplizierten Aufbau noch Probleme hinsichtlich der Abdichtung.

Bei einem durch die US-A 4 347 666 bekanntgewordenen Fadenschneider ist eine ähnlich drehzahlabhängig wirkende Nachstellvorrichtung vorgesehen, die wirksam wird, wenn die Drehzahl von einem ersten Wert auf einen zweiten Wert ansteigt. Innerhalb des Kopfes bewegt sich ein seitlich versetzbarer Nocken durch die Zentrifugalkraft nach aussen, um die Fadenspule freizugeben. Die Spule dreht sich dann um einen bestimmten Winkel und der Nocken wird dann durch den Widerstand des verlängerten Schneidfadens beim Schneidvorgang zurückgeführt. Nachdem das Ausfahren des Schneidfadens erfolgt ist, wird die Spule durch den Nocken wieder in der Ausgangslage automatisch gegen weitere Drehung innerhalb des Kopfes festgelegt.

Die bekannten Nachstellvorrichtungen weisen demgemäss einen aufwendigen und störanfälligen konstruktiven Aufbau auf, dessen Funktion schon durch geringe Verschmutzung in Frage gestellt werden kann. Manuelle willkürliche Nachstellung des Fadens ist nur mit grosser Mühe möglich.

In der EP-A 140 634, die unter den Artikel 54 (3) EPÜ fällt und somit für die Frage der erfinderischen Tätigkeit nicht von Bedeutung ist, wird die Fadenspule durch Kugeln drehzahlabhängig axial verschoben, wodurch nach einer bestimmten relativen Winkeldrehung eine Anschlagverbindung mit dem Gehäuse erfolgt, die aufgehoben wird, nachdem bei Drehzahlabfall die Kugeln wieder radial nach innen laufen und die entgegengesetzte Axialbewegung der Spule zulassen, die dann nach einer weiteren relativen Winkeldrehung durch Formschlussanschläge wieder festgelegt wird. Die Steuerkugeln laufen dabei in drei um 120° versetzten Bahnen unter Zentrifugalwirkung nach aussen und heben dabei über eine Steuerkurve die Spule an, während bei Drehzahlabfall die Kugeln unter der Wirkung einer Druckfeder wieder radial nach innen laufen und die Spule nach unten gleiten lassen.

Die Erfindung geht aus von einem elektromotorisch angetriebenen Schneidkopf für einen Fadenschneider mit wenigstens einer gegenüber dem Schneidkopf durch eine Verriegelung festlegbaren und nach Fliehkraft abhängigem Lösen der Verriegelung schrittweise drehbaren Fadenspule, von der ein Schneidfaden durch ein Führungsloch des Schneidkopfes vorsteht, dessen Länge schrittweise auf einen vorbestimmten Wert nachstellbar ist.

Der Erfindung liegt die Aufgabe zugrunde, einen solchen gattungsgemässen Schneidkopf derart zu verbessern, dass bei einfachem konstruktivem Aufbau und betriebssicherer und störungsfreier Arbeitsweise eine automatische Nachstellung gewährleistet ist, wobei diese automatische Nachstellung erforderlichenfalls durch manuelle Massnahmen unterstützt oder ersetzt werden kann.

Gelöst wird die gestellte Aufgabe durch die im Kennzeichnungsteil des Patentanspruchs 1 gemäss der Fassung A bzw. der Fassung B angegebenen Merkmale. Der Fadenvorlauf zwischen zwei Entriegelungsschritten (Anschaltphase bzw. Abschaltphase) ist dabei so gewählt, dass er der natürlichen Abnutzung bei einem durchschnittlich langen Arbeitsgang entspricht. Wenn nun aber durch Auftreffen auf harte Gegenstände dieser Vorschub nicht ausreicht, kann durch wiederholtes An- und Abschalten des Motors der Faden wieder auf eine vorbestimmte Länge gebracht werden, ohne dass es notwendig wäre, manuell am Schneidkopf tätig zu werden.

Selbst bei grober Verschmutzung, die sich insbesondere beim Schneiden von nassen Gräsern und Pflanzen einstellen kann, wird eine automatische Nachstellung gewährleistet, während bei den bekannten Vorrichtungen im Falle einer Verschmutzung entweder überhaupt kein Vorschub mehr erfolgt, oder ein unkontrolliert schneller Vorschub, der zu einem vorzeitigen Verbrauch der Fadenspule führt.

Zweckmässige konstruktive Ausgestaltungen des automatischen Vorschubmechanismus ergeben sich aus den Unteransprüchen 2 bis 4 gemäss Fassung A und aus dem Unteranspruch 2 gemäss Fassung B. Der Anspruch 5 gemäss Fassung A und Anspruch 3 gemäss Fassung B beinhalten eine manuelle Betätigungsmöglichkeit, die auch bei funktionierendem automatischem Vorschubmechanismus erforderlich sein kann, nämlich dann, wenn der Faden unmittelbar an seiner Austrittsöffnung abgerissen ist, weil dann die Fliehkraft zum Herausziehen zu gering ist. In einem solchen Falle ist es zweckmässig und notwendig, die Entriegelung manuell schnell aufheben zu können, ohne – wie beim Stande der Technik – erst den Deckel abnehmen zu müssen. Durch den Auslöseknopf ist man in der Lage, auf die Verriegelungsvorrichtungen in der gleichen Weise einzuwirken, wie dies die Fliehkräfte im Betrieb bewirken.

Nachstehend wird ein Ausführungsbeispiel der Erfindung anhand der Zeichnung beschrieben. In der Zeichnung zeigen:

Fig. 1 einen Axialschnitt eines erfindungsgemäss ausgebildeten Schneidkopfes;
Fig. 2 einen um 90° gegenüber Fig. 1 verdrehten Axialschnitt, wobei links der Drehachse der Schneidkopf in Ruhestellung und rechts in Drehstellung gezeigt ist;
Fig. 3 eine schematische Ansicht des erfindungsgemäss ausgebildeten Schneidkopfes eines Fadenschneiders in Ruhestellung;
Fig. 4 eine der Fig. 3 entsprechende schematische Schnittansicht des Schneidkopfes in Drehstellung;
Fig. 5 einen schematischen Horizontalschnitt des Schneidkopfes nach Fig. 3 und 4;
Fig. 6 eine Abwicklung der Verriegelungsnockenanordnung.

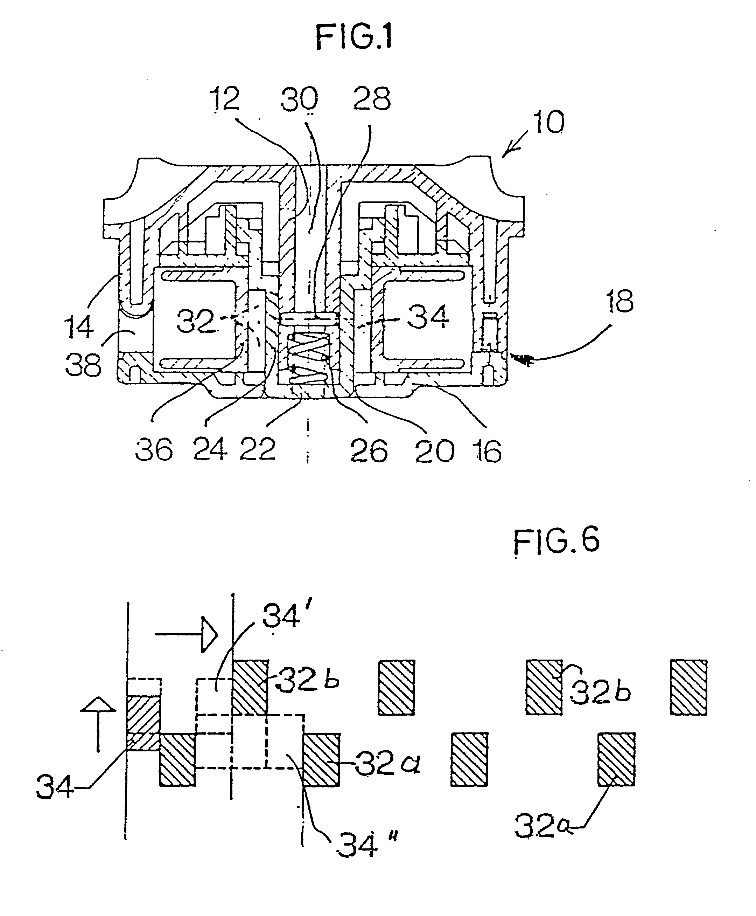

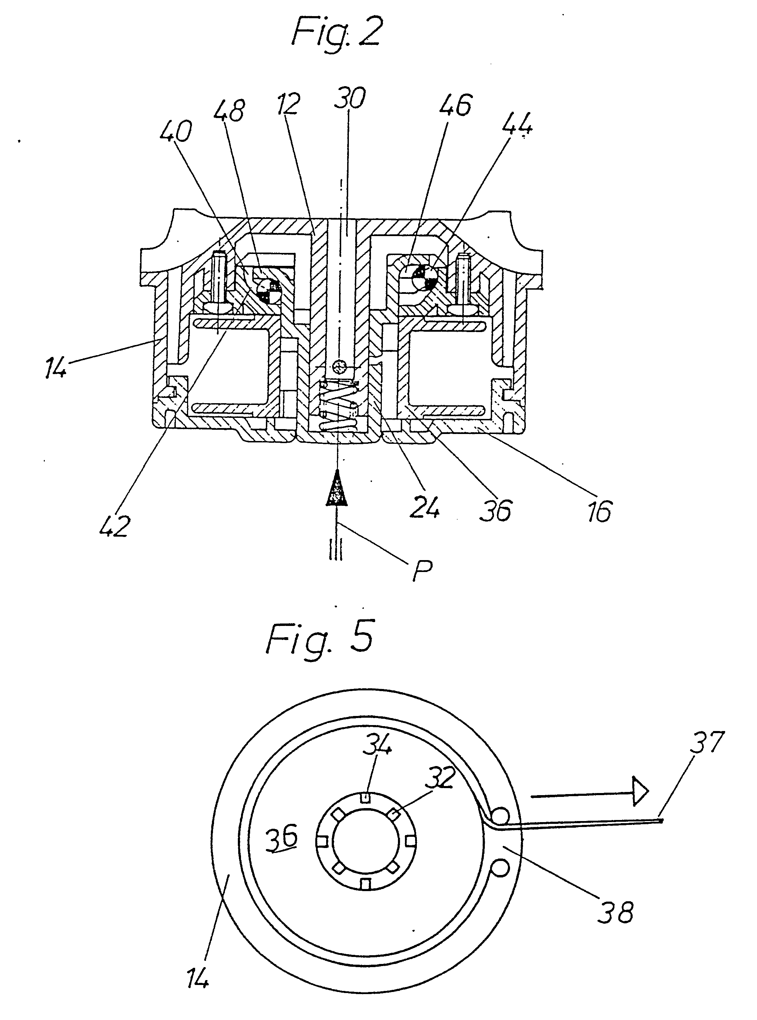

Der Schneidkopf 10 weist gemäss Fig. 1 und 2 ein topfartiges, einstückig mit einer Hohlnabe 12 geformtes Gehäuse 14 auf, welches durch einen Deckel 16 mit einem Bajonettverschluss 18 verschliessbar ist. Dieser Deckel 16 ist beim Schneiden dem Boden zugewandt, und er weist ein zentrales kreisrundes Loch 20 auf, durch das hindurch die Stirnseite 22 einer auf der Nabe 12 axial verschiebbaren Hülse 24 zugänglich ist. Innenseitig stützt sich axial an der Stirnseite 22 eine Druckschraubenfeder 26 ab, deren anderes Ende gegen einen Stift 28 lagert, der radial in die Nabe 12 eingesetzt ist. Die Feder 26 liegt im Hohlraum 30 dieser Nabe 12. Die Hülse 24 ist aussenseitig mit radial vorstehenden Verriegelungsnocken 32 versehen, die mit inneren Verriegelungsnocken 34 (Fig. 5) einer die Hülse 24 umschliessenden Fadenspule 36 in später noch zu beschreibender Weise zusammenwirken. (Der Schnitt gemäss Fig. 1 ist so gelegt, dass keiner der Nocken 32 oder 34 geschnitten ist). Durch eine radiale Öffnung 38 kann der auf der Spule 36 aufgewickelte Schneidfaden 37 radial nach aussen treten. Nach Abnahme des Deckels 16 ist die Fadenspule 36 axial von der Hülse 24 abziehbar und kann durch eine neue ersetzt werden, wie dies bei bekannten Fadenschneidern möglich ist.

Wie aus Fig. 2 ersichtlich, weist das Gehäuse 14 radiale Kugelführungsschlitze 40 mit einer unteren schiefen Ebene 42 auf, und in jedem Kugelführungsschlitz (gemäss dem Ausführungsbeispiel sind zwei diametral gegenüberliegende Kugelschlitze vorgesehen) läuft eine Kugel 44, die sich oben an einer Kugelauffläche 46 abstützt, die im wesentlichen horizontal verlaufend an einem radialen Fortsatz 48 der Hülse 24 angeordnet ist.

Durch Bewegung der Hülse 24 nach oben in Pfeilrichtung P gemäss Fig. 2 wird die Verriegelung zwischen der Hülse 24, die drehfest gegenüber dem Gehäuse 14 ist, und der Fadenspule 36 über einen bestimmten Bogenabschnitt aufgehoben. Diese Entriegelung kann wie bisher üblich dadurch erfolgen, dass die Hülse durch Fingerdruck auf die Stirnseite 22 eingedrückt wird, nachdem der Schneidkopf stillsteht, und dass dann im entriegelten Zustand ein Stück Faden abgewickelt wird, bis nach Loslassen der Hülse 24 diese von der Feder 26 in die Verriegelungsstellung zurückgeführt wird.

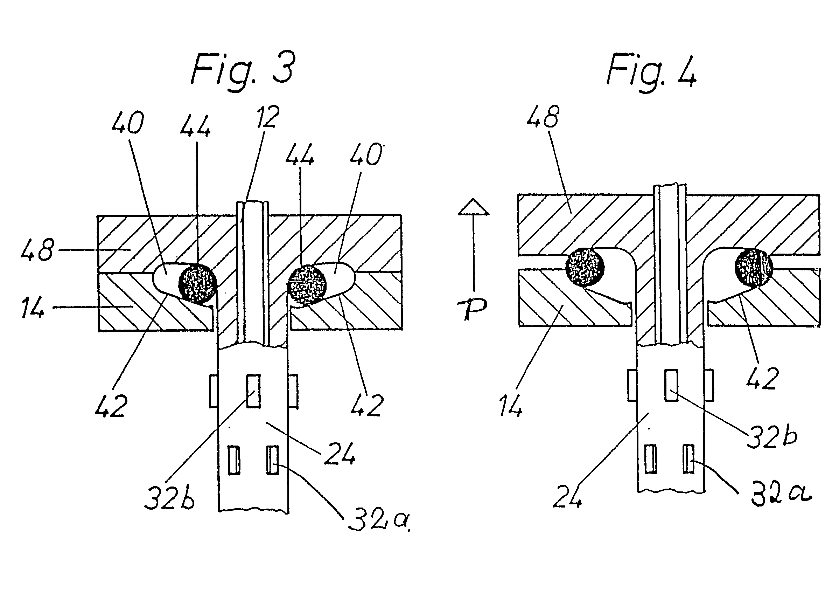

Die Axialverschiebung der Hülse 24 erfolgt jedoch auch automatisch durch die auf die Kugeln 44 bei Drehung des Schneidkopfes wirkende Fliehkraft. Zur Veranschaulichung dieses Prinzips wird auf die prinzipiellen Darstellungen gemäss Fig. 3 bis 6 verwiesen. In Ruhestellung wird die Hülse 24 und mit ihr die radialen Fortsätze 48 durch die Feder 26 nach unten gedrückt, wodurch die Kugeln 44 in ihre radial innere Stellung innerhalb der Kugelführungsschlitze 40 versetzt werden. Wenn sich der Schneidkopf dreht, werden die Kugeln 44 durch die Fliehkraft nach aussen bewegt, und über die schiefe Ebene 42 wird die Hülse 24 mit dem Teil 48 gegenüber dem axial festen Gehäuse in die Stellung gemäss Fig. 4 angehoben. Die Fig. 3 entspricht der in Fig. 2 auf der linken Seite der Achse angegebenen Schaltstellung, während die Fig. 4 die Schaltstellung rechts der Achse gemäss Fig. 2 wiedergibt.

Die Lageanordnung der Verriegelungs- bzw. Mitnahmenocken 32 und 34 ist aus der Abwicklung gemäss Fig. 6 deutlich ersichtlich. Demgemäss sind an der Hülse 24 aussen in unterschiedlichen Höhenlagen zueinander und umfangsmässig versetzt Nocken 32a und 32b angeordnet, und die Nabe der Fadenspule trägt innenseitig auf mittlerer Höhe entsprechende klauenartig ausgebildete Verriegelungsnocken 34.

Durch eine relative Axialverschiebung zwischen der Hülse 24 und Fadenspule 36 ergibt sich der aus Fig. 6 ersichtliche Bewegungsablauf. In der linken Endstellung ist der Schneidkopf in rotierender Lage gezeigt. In dieser Drehstellung ist die Hülse angehoben und befindet sich in der Lage gemäss Fig. 4. Dadurch stehen die unteren Verriegelungsnocken 32a der Hülse 24 mit den Verriegelungsnocken 34 in Eingriff und nehmen über diese die Hülse mit. Bei Abschaltung des Motors verschiebt sich die Hülse 24 aus der Stellung gemäss Fig. 4 in die Stellung gemäss Fig. 3, und der Verriegelungsnocken 34 nimmt nunmehr die in Fig. 6 strichlierte Stellung 34' ein und wirkt mit dem oberen Nocken 32b formschlüssig zusammen. Bei diesem Abschaltvorgang konnte sich die Fadenspule 36 relativ zu der Lagerhülse 24 um einen gewissen Winkelbetrag drehen und ein dieser Winkeldrehung entsprechendes Fadenstück kann durch Zentrifugalkraft nach aussen bewegt werden. Wenn der Schalter wieder eingelegt wird, dann wandern durch Fliehkraft die Kugeln 44 wieder nach aussen und der Schneidkopf geht von der Stellung gemäss Fig. 3 in die Stellung nach Fig. 4 zurück, wobei die Verriegelungsnocken 34 in die Stellung 34'' überführt werden, in der wieder ein Formschlusseingriff zwischen den Nocken 34'' und 32a zustande kommt. Bei diesem Einschaltvorgang ergab sich wiederum eine relative Winkeldrehung zwischen der Hülse 24 und der Fadenspule 36, so dass eine gewisse Fadenlänge wieder nach aussen gelangt.

Durch mehrmaliges Ein- und Ausschalten kann der Faden ausgefahren werden, bis die erforderliche Fadenlänge erreicht ist, die durch Auftreffen des Fadenendes auf eine gehäusefeste Schneide in der Länge und durch die durch Verlängerung der Fadenlänge bedingte Drehzahlerniedrigung begrenzt ist. D.h., die Verlängerung wird nur dann nach dem Wiederanschalten möglich, wenn die Drehzahl die Normaldrehzahl übersteigt.

Die in Fig. 6 dargestellte Anordnung kann auch umgekehrt werden, d.h. es können jeweils obere und untere Nocken an der Fadenspule vorgesehen werden und der dazwischen schaltbare Nokken an der Hülse 24 sitzen.

**Patentansprüche für die Vertragsstaaten: AT, BE, CH, LI, NL, SE**

1. Elektromotorisch angetriebener Schneidkopf (10) für einen Fadenschneider mit wenigstens einer gegenüber dem Schneidkopf durch eine Verriegelung festlegbaren und nach fliehkraftabhängigem Lösen der Verriegelung schrittschweise drehbaren Fadenspule (36), von der ein Schneidfaden (37) durch ein Führungsloch (38) des Schneidkopfes vorsteht, dessen Länge schrittweise auf einen vorbestimmten Wert nachstellbar ist, dadurch gekennzeichnet, dass der Schneidkopf (10) in Radialrichtung verlaufende Kugelführungsschlitze (40) aufweist, in denen Kugeln (44) laufen, die durch Zentrifugalkraft nach aussen und durch Federwirkung nach innen gedrängt werden und durch diese Auswärts- bzw. Einwärtsbewegung die Entriegelung bzw. Wiederverriegelung bewirken, so dass die schrittweise Entriegelung der Fadenspule (36) bei jedem Hochlauf des Motors (Anschaltphase) und jedem Auslauf des Motors (Abschaltphase) in einem unter der Solldrehzahl liegenden Bereich erfolgt.

2. Schneidkopf nach Anspruch 1, dadurch gekennzeichnet, dass die Kugeln (44) zwischen einem festen Gehäuseteil (14) und einem mit der Lagerhülse (24) der Fadenspule (36) in Verbindung stehenden Teil (48) laufen und eine relative Axialverschiebung zwischen Fadenspule (36) und der sie lagernden Hülse (24) bewirken.

3. Schneidkopf nach Anspruch 1 und 2, dadurch gekennzeichnet, dass Verriegelungsklauen (32, 34) auf der Aussenseite der Lagerhülse (24) und der Innenseite der Fadenspule (36) angeordnet sind, welche axial versetzt zueinander liegen und durch Relativverschiebung in und ausser Kupplungseingriff überführbar sind.

4. Schneidkopf nach den Ansprüchen 1 bis 3, dadurch gekennzeichnet, dass ein mittlerer Verriegelungsnocken (34) mit im umfangsmässigen Abstand und im axialen Abstand zueinander angeordneten Schaltnocken (32a, b) zusammenwirkt, von denen die einen (32b) die Winkelbegrenzung nach Drehzahlanstieg und die anderen die Winkelbegrenzung nach Drehzahlabfall bewirken.

5. Fadenschneider nach Anspruch 1, dadurch gekennzeichnet, dass die schrittweise Entriegelung durch einen zentralen Entriegelungsknopf (22) fliehkraftunabhängig manuell auslösbar ist.

**Patentansprüche für die Vertragsstaaten: FR, IT**

1. Elektromotorisch angetriebener Schneidkopf (10) für einen Fadenschneider mit wenigstens einer gegenüber dem Schneidkopf durch eine Verriegelung festlegbaren und nach fliehkraftabhängigem Lösen der Verriegelung schrittweise drehbaren Fadenspule (36), von der ein Schneidfaden (37) durch ein Führungsloch (38) des Schneidkopfes vorsteht, dessen Länge schrittweise auf einen vorbestimmten Wert nachstellbar ist, dadurch gekennzeichnet, dass der Schneidkopf (10) in Radialrichtung verlaufende Kugelführungsschlitze (40) aufweist, in denen Kugeln (44) laufen, die durch Zentrifugalkraft nach aussen und durch Federwirkung nach innen gedrängt werden und durch diese Auswärts- bzw. Einwärtsbewegung die Entriegelung bzw. Wiederverriegelung bewirken, so dass die schrittweise Entriegelung der Fadenspule (36) bei jedem Hochlauf des Motors (Anschaltphase) und jedem Auslauf des Motors (Abschaltphase) in einem unter der Solldrehzahl liegenden Bereich erfolgt, dass die Kugeln (44) zwischen einem festen Gehäuseteil (14) und einem mit der Lagerhülse (24) der Fadenspule (36) in Verbindung stehenden Teil (48) laufen und dass Verriegelungsklauen (32, 34) auf der Aussenseite der Lagerhülse (24) und der Innenseite der Fadenspule (36) angeordnet sind, welche axial versetzt zueinander liegen und durch Relativverschiebung in und ausser Kupplungseingriff überführbar sind.

2. Schneidkopf nach Anspruch 1, dadurch gekennzeichnet, dass ein mittlerer Verriegelungsnocken (34) mit im umfangsmässigen Abstand und im axialen Abstand zueinander angeordneten Schaltnocken (32a, b) zusammenwirkt, von denen die einen (32b) die Winkelbegrenzung nach Drehzahlanstieg und die anderen die Winkelbegrenzung nach Drehzahlabfall bewirken.

3. Fadenschneider nach Anspruch 1, dadurch gekennzeichnet, dass die schrittweise Entriegelung durch einen zentralen Entriegelungsknopf (22) fliehkraftunabhängig manuell auslösbar ist.

**Claims for the Contracting states: AT, BE, CH, LI, NL, SE**

1. Electric-motor-driven cutting head (10) for a cord cutter comprising at least one cord spool (36) which is adapted to be locked with respect to the cutting head by a locking means and to be stepwise rotated after centrifugal-force-dependent releasing of the locking and from which a cutting cord (37) projects through a guide hole (38) of the cutting head of which the length is stepwise adjustable to a predetermined value, characterized in that the cutting head (10) comprises radially extending ball guide slots (40) in which balls (44) run which are urged outwardly by centrifugal force and inwardly by spring action and effect by this outward and inward movement the unlocking and relocking respectively in such a manner that the stepwise unlocking of the cord spool (36) takes place on each runup of the motor (starting phase) and each running down of the motor (stopping phase) in a range lying beneath the desired speed of rotation.

2. Cutting head according to claim 1, characterized in that the balls (44) run between a fixed housing part (14) and a part in connection with the bearing sleeve (24) of the cord spool (36) and effect a relative axial displacement between the cord spool (36) and the sleeve (24) mounting it.

3. Cutting head according to claim 1 or 2, characterized in that the locking claws (32, 34) are arranged on the outer side of the bearing sleeve (24) and the inner side of the cord spool (36) which lie axially offset with respect to each other and can be brought into and out of coupling engagement by relative displacement.

4. Cutting head according to claims 1 to 3, characterized in that a centre locking cam (34) cooperates with cams (32a, b) which are arranged circumferentially and axially spaced from each other and of which the cams (32b) effect the angular limitation after the speed rise and the other cams the angular limitation after the speed drop.

5. Cord cutter according to claim 1, characterized in that the stepwise unlocking is manually initiatable by a central unlocking head (22) independently of the centrifugal force.

**Claims for the Contracting states: FR, IT**

1. Electric-motor-driven cutting head (10) for a cord cutter comprising at least one cord spool (36) which is adapted to be locked with respect to the cutting head by a locking means and to be stepwise rotated after centrifugal-force-dependent releasing of the locking and from which a cutting cord (37) projects through a guide hole (38) of the cutting head of which the length is stepwise adjustable to a predetermined value, characterized in that the cutting head (10) comprises radially extending ball guide slots (40) in which balls (44) run which are urged outwardly by centrifugal force and inwardly by spring action and effect by this outward and inward movement the unlocking and relocking respectively in such a manner that the stepwise unlocking of the cord spool (36) takes place on each runup of the motor (starting phase) and each running down of the motor (stopping phase) in a range lying beneath the desired speed of rotation, that the balls (44) run between a fixed housing part (14) and a part (48) in connection with the bearing shell (24) of the cord spool (36) and that locking claws (32, 34) are arranged on the outer side of the bearing sleeve (24) and the inner side of the cord spool (36) which lie axially offset with respect to each other and can be brought into and out of coupling engagement by relative displacement.

2. Cutting head according to claim 1, characterized in that a centre locking cam (34) cooperates with cams (32a, b) which are arranged circumferentially and axially spaced from each other and of which the cams (32b) effect the angular limitation after the speed rise and the other cams the angular limitation after the speed drop.

3. Cord cutter according to claim 1, characterized in that the stepwise unlocking is manually initiatable by a central unlocking head (22) independently of the centrifugal force.

**Revendications pour les états contractants: AT, BE, CH, LI, NL, SE**

1. Tête coupante (10) actionnée par moteur électrique pour un outil de coupe à fil, comportant au moins une bobine de fil (36) pouvant être fixée vis-à-vis de la tête coupante par un verrouillage et pouvant tourner progressivement après libération du verrouillage en fonction de la force centrifuge, un fil de coupe (37) dépassant de la bobine par un trou de guidage (38) de la tête coupante, fil dont la longueur peut être ajustée progressivement à une valeur préalablement fixée, caractérisée par le fait que la tête coupante (10) présente des fentes de guidage de billes (40) se développant en directon radiale, dans lesquelles se déplacent des billes (44), qui sont poussées par la force centrifuge vers l'extérieur et par l'action d'un ressort vers l'intérieur et qui, par ce mouvement vers l'extérieur ou vers l'intérieur, provoquent le déverrouillage ou le reverrouillage, de sorte que le déverrouillage progressif de la bobine de fil (36) intervient à chaque accélération du moteur (phase de mise en route) et à chaque arrêt du moteur (phase de coupure) dans une plage de vitesses se trouvant au-dessous de la vitesse de rotation de consigne.

2. Tête coupante selon la revendication 1, caractérisée par le fait que les billes (44) se déplacent entre un élément boîtier fixe (14) et un élément (48) se trouvant en liaison avec le manchon support (24) de la bobine de fil (36) et provoquent un décalage axial relatif entre la bobine de fil (36) et le manchon (24) qui la supporte.

3. Tête coupante selon les revendications 1 et 2, caractérisée par le fait que des griffes de verrouillage (32, 34) sont disposées sur la face extérieure du manchon support (24) et sur la face intérieure de la bobine de fil (36), lesdites griffes étant décalées axialement les unes par rapport aux autres et un déplacement relatif permettant leur embrayage ou leur débrayage.

4. Tête coupante selon les revendications 1 à 3, caractérisée par le fait qu'une came de verrouillage centrale (34) agit en combinaison avec des cames de commande (32a, b) décalées les unes par rapport aux autres axialement et suivant la périphérie, les unes (32b) provoquant la limitation angulaire après accélération et les autres la limitation angulaire après réduction de la vitesse de rotation.

5. Outil de coupe à fil selon la revendication 1, caractérisé par le fait que le déverrouillage progressif peut être déclenché manuellement et indépendamment de la force centrifuge par un bouton de déverrouillage central (22).

**Revendications pour les états contractants: FR, IT**

1. Tête coupante (10) actionnée par un moteur électrique pour un outil de coupe à fil, comportant au moins une bobine de fil (36) pouvant être fixée vis-à-vis de la tête coupante par un verrouillage et pouvant tourner progressivement après libération du verrouillage en fonction de la force centrifuge, un fil de coupe (37) dépassant de la bobine par un trou de guidage (38) de la tête coupante, fil dont la longueur peut être ajustée progressivement à une valeur préalablement fixée, caractérisée par le fait que la tête coupante (10) présente des fentes de guidage de billes (40) se développant en direction radiale, dans lesquelles se déplacent des billes (44), qui sont poussées par la force centrifuge vers l'extérieur et par l'action d'un ressort vers l'intérieur et qui, par ce mouvement vers l'extérieur ou vers l'intérieur, provoquent le déverrouillage ou le reverrouillage, de sorte que le déverrouillage progressif de la bobine de fil (36) intervient à chaque accélération du moteur (phase de mise en route) et à chaque arrêt du moteur (phase de coupure) dans une plage de vitesses se trouvant au-dessous de la vitesse de rotation de consigne, par le fait que les billes (44) se déplacent entre un élément boîtier fixe (14) et un élément (48) se trouvant en liaison avec le manchon support (24) de la bobine de fil (36) et par le fait que des griffes de verrouillage (32, 34) sont disposées sur la face extérieure du manchon support (24) et sur la face intérieure de la bobine de fil (36), lesdites griffes étant décalées axialement les unes par rapport aux autres et un déplacement relatif permettant leur embrayage ou leur débrayage.

2. Tête coupante selon la revendication 1, caractérisée par le fait qu'une came de verrouillage centrale (34) agit en combinaison avec des cames de commande (32a, b) décalées les unes par rapport aux autres axialement et suivant la périphérie, les unes (32b) provoquant la limitation angulaire après accélération et les autres la limitation angulaire après réduction de la vitesse de rotation.

5. Outil de coupe à fil selon la revendication 1, caractérisé par le fait que le déverrouillage progressif peut être déclenché manuellement et indépendamment de la force centrifuge par un bouton de déverrouillage central (22).

FIG.1

FIG.6

7

# Fig. 2

# Fig. 5

Fig. 3

Fig. 4

EP 0 176 581 B1